# EUROPÄISCHE PATENTSCHRIFT

(11) **EP 1 068 744 B1**
(45) Veröffentlichungstag und Bekanntmachung des Hinweises auf die Patenterteilung: **17.12.2008**
(21) Anmeldenummer: 99924771.1
(22) Anmeldetag: 01.04.1999
(51) Int. Cl.: H04Q 3/00, H04Q 3/62, H04Q 7/26

(54) **VERFAHREN ZUM VERBINDUNGSAUFBAU VON EINEM MOBILFUNKNETZ ZU EINER ZIELRUFNUMMER EINES PRIVATEN KOMMUNIKATIONSNETZES**
METHOD FOR SETTING UP A CONNECTION BETWEEN A MOBILE RADIO NETWORK AND A DESTINATION CALL NUMBER IN A PRIVATE COMMUNICATION NETWORK
PROCEDE PERMETTANT D'ETABLIR UNE COMMUNICATION ENTRE UN RESEAU DE RADIOPHONIE MOBILE ET UN NUMERO DESTINATAIRE D'UN RESEAU DE COMMUNICATION PRIVE

(30) Priorität: 07.04.1998 DE 19815430
(43) Veröffentlichungstag der Anmeldung: 17.01.2001
(73) Patentinhaber: T-Mobile Deutschland GmbH, 53227 Bonn (DE)
(72) Erfinder: DRESSEL, Jan, D-53604 Bad Honnef (DE); HAKE, Jens, D-09240 Kemtau (DE)
(74) Vertreter: Riebling, Peter
(86) Internationale Anmeldenummer: PCT/DE1999/001022
(87) Internationale Veröffentlichungsnummer: WO 1999/052255

(56) Entgegenhaltungen:
- WO-A-92/13428
- WO-A-96/21323
- WO-A-97/34437
- US-A- 5 566 236

## Beschreibung

Die vorliegende Erfindung betrifft ein Verfahren zum Verbindungsaufbau von einem Mobilfunknetz zu einer Zielrufnummer eines privaten Kommunikationsnetzes.

Großkunden können über einen sogenannten Direct Access ihr privates Kommunikationsnetz (z.B. Nebenstellenanlage) direkt mit einem Mobilfunknetz verbinden und können somit Verbindungen zwischen mobilem Endgerät und der Nebenstellenanlage zum netzintemen Tarif kostengünstig abwickeln. Diese Möglichkeit ist für kleinere Firmenkunden jedoch wegen des geringeren Verkehrsaufkommens nicht attraktiv, da sie zu aufwendig und zu teuer wäre.

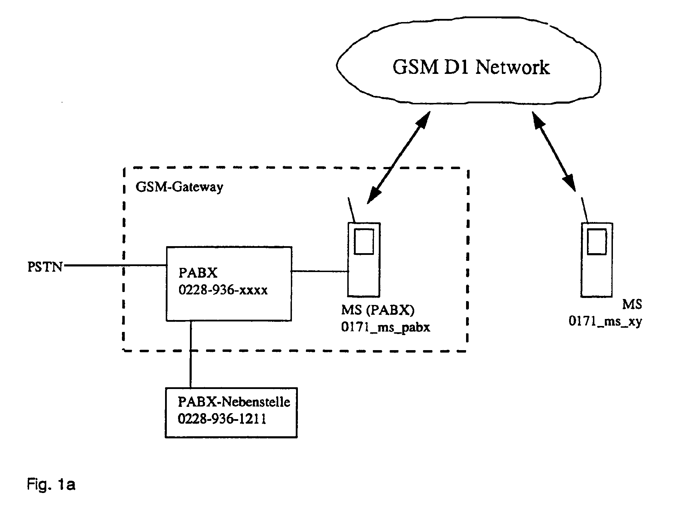

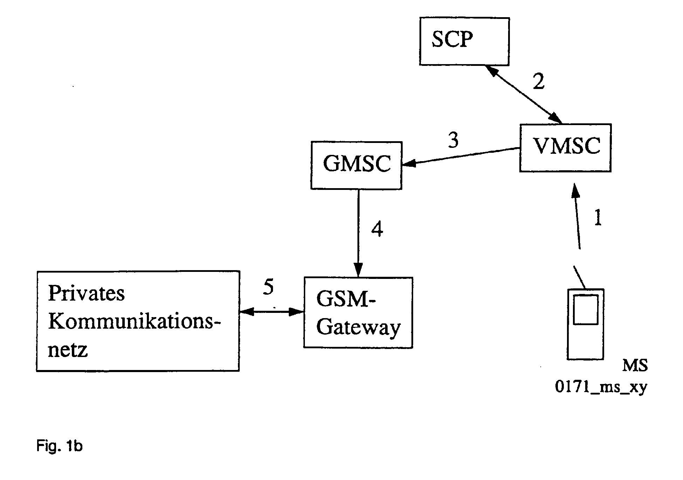

Deshalb wurden Mobilfunknetz-Zugangseinrichtungen (sogenannte Gateways wie z.B. GSM-Gateways) entwickelt. Damit können nun Verbindungen von der Nebenstellenanlage in ein Mobilfunknetz zum netzinternen Tarif kostengünstig abgewickelt werden. Umgekehrt ist eine Verbindung vom mobilen Endgerät direkt zu einem Nebenstellenanschluß so jedoch nicht möglich. Die am Markt angebotenen Lösungen arbeiten in diesem Fall folgendermaßen (s. auch Fig. 1):
- Der Mobilteilnehmer wählt nur die Mobilfunknummer des Gateways.
- Das Gateway nimmt die Verbindung sofort an.
- Der Mobilteilnehmer kann jetzt mittels Mehrfrequenzwahl oder Sprachsteuerung den gewünschten Nebenstellenanschluß wählen.

US-A-5 566 236 offenbart eine solche Lösung, bei der ein PCS Tandem Switch verwendet wird, der, falls ein gewünschter Anschluss nicht erreicht wird, einerseits ein ankommendes Gespräch entgegennimmt und andererseits eine Verbindung zu einer der gewünschten Rufnummer entsprechenden Mobilfunkrufnummer aufbaut.

Nachteil dieser Arbeitsweise für den Kunden ist, daß vom mobilen Endgerät aus keine direkte Durchwahl zu einem Nebenstellenanschluß möglich ist und daß Verbindungsgebühren ab dem Zeitpunkt der Verbindungsannahme durch das Gateway anfallen. Auch wenn der Nebenstellenanschluß besetzt ist oder der Ruf nicht entgegengenommen wird, fallen Verbindungsgebühren im Mobilfunknetz an.

Aus dem Stand der Technik ist aus DE 196 23 689 ein Verfahren zur Unterstützung von privaten Nummerierungsplänen durch öffentliche Telekommunikationsnetze bekannt, das erlaubt, eine Verbindung von einem privaten Telekommunikationsnetz über ein öffentliches Zwischennetz in ein anderes privates Telekommunikationsnetz zu vermitteln. Die Vermittlung zu den Nebenstellen des privaten Telekommunikationsnetzes wird dabei durch ein Intelligentes Netzwerk (IN) sichergestellt. Jedoch bietet dieser Stand der Technik keine Lösung für die oben genannte Problematik, wenn der Zugang zum privaten Telekommunikationsnetz über ein Mobilfunknetz erfolgt.

Aufgabe der vorliegenden Erfindung ist es daher, ein Verfahren für einen vereinfachten und kostengünstigeren Verbindungsaufbau von einem Mobilfunknetz in ein privates Kommunikationsnetz bereitzustellen. Diese Aufgabe wird gelöst durch die Merkmale des Anspruchs 1. Dabei ist die Erfindung nicht nur auf private Telekommunikationsnetze mit Nebenstellenanlagen oder Sprachkommunikationsnetze beschränkt, sondern kann auch z.B. für den Zugang zu Daten- oder Rechnernetzen (z.B. Internet oder Intranet) Anwendung finden.

Die vorliegende Erfindung bietet somit die folgenden Vorteile:
- Verbindungsgebühren bei Nutzung einer Mobilfunknetz-Zugangseinrichtung zum direkten Zugang von einem Mobilfunknetz in ein privates Kommunikationsnetz fallen tatsächlich nur dann an, wenn wirklich die gewünschte Verbindung durchgeschaltet werden kann.
- Anschlüsse von Nebenstellenanlagen sind direkt erreichbar.
- Ein Virtuelles Privates Netzwerk (VPN) ist realisierbar, ohne daß eine Standleitungsanbindung der Nebenstellenanlage an das Mobilfunknetz nötig wäre.

Der Mobilfunknetz-Zugangseinrichtung kann bevorzugt bereits im Rahmen des Verbindungswunsches von Seiten des mobilen Endgerätes die gewünschte Zielrufnummer des privaten Netzes bzw. der Nebenstellenanlage übermittelt werden, damit mit diesen Informationen vor Annahme der Verbindung aus dem Mobilfunknetz eine Verbindung innerhalb des privaten Netzes zu dem gewünschten Nebenstellenanschluß hergestellt werden kann. Erst wenn diese Verbindung hergestellt ist, wird das Gespräch aus dem Mobilfunknetz angenommen.
Insbesondere kann so einem GSM-Gateway als Mobilfunknetz-Zugangseinrichtung die gewünschte Zielrufnummer eines Nebenstellenanschlusses in einem geeigneten Informationselement während des Rufaufbaus übertragen werden.

Mit Hilfe eines Intelligenten Netzwerkes (IN) kann beispielsweise eine entsprechende Rufnummernumsetzung durchgeführt werden. Zusätzlich können unter Verwendung der in Intelligenten Netzwerken üblichen INAP-Connect-Nachricht weitere Informationselemente während der Rufaufbaus geeignet modifiziert oder neu eingefügt werden, damit eine verbesserte oder erleichterte Übermittlung der Information über die gewünschten Zielrufnummer an die Mobilfunknetz-Zugangseinrichtung erfolgen kann.

Die Mobilfunknetz-Zugangseinrichtung oder eine mit dieser Einrichtung verbundene Auswerteeinrichtung (beispielsweise ein Intelligentes Netzwerk) kann die während des Rufaufbaus empfangenen Informationselemente derart auswerten, daß die Zielrufnummer detektiert werden kann.

Anhand der Figuren 1 bis 3 sowie der nachfolgenden zugehörigen Beschreibung werden beispielhafte Ausgestaltungen des erfindungsgemäßen Verfahrens unter Bezugnahme auf ein Mobilfunknetz nach dem GSM-Standard sowie die dort üblichen Datenstrukturen erläutert.

Es zeigen:
Figur 1a: Verfahren zum Verbindungsaufbau nach dem Stand der Technik
Figur 1b zeigt beispielhaft den Nachrichtenfluß beim Verbindungsaufbau und die beteiligten Netzelemente.
Figur 2a) und b): Ablaufdiagramm des Verbindungsaufbaus, wobei die gewünschte Zielrufnummer (Nebenstellenanschluß) als Calling_Line_Identification (CLI) übermittelt wird
Figur 3a) und b): Ablaufdiagramm des Verbindungsaufbaus, wobei die gewünschte Zielrufnummer (Nebenstellenanschluß) als Unstructered_SS_Data übermittelt wird

### Zu Fig. 1 b:

Es wird folgender Ablauf dargestellt:
- (1): Verbindungsaufbau von MS_XY zu MSC/SSP serving MS_XY (SETUP)
- (2): IN Abfrage (IDP/CONNECT)
- (3): Verbindungsaufbau zu MSC serving MS_PABX (IAM)
- (4): Verbindungsaufbau von MSC serving MS_PABX zu MS_PABX/GSM-Gateway (SETUP)
- (5): Verbindungsaufbau von GSM-Gateway zu PABX-Anschluß

Dem GSM-Gateway als Mobilfunknetz-Zugangseinrichtung wird die gewünschte Zielrufnummer eines Nebenstellenanschlusses in einem geeigneten Informationselement während des Rufaufbaus zu übertragen.
Mit Hilfe eines entsprechenden Intelligentes Netzwerkes (IN) Dienstes wird eine entsprechende Rufnummernumsetzung durchgeführt. Zusätzlich können unter Verwendung der INAP Connect Nachricht weitere Informationselemente während des Rufaufbaus geeignet modifiziert oder neu eingefügt werden, damit dem GSM-Gateway die Information über den gewünschten Nebenstellenanschluß übermittelt werden kann.

Das GSM-Gateway wiederum wertet die während des Rufaufbaus empfangenen Informationselemente derart aus, daß die Rufnummer eines Nebenstellenanschlußes detektiert werden kann. Wurde ein solcher detektiert, wird versucht, eine nebenstelleninterne Verbindung zum gewünschten Anschluß aufzubauen. Erst wenn diese Verbindung hergestellt ist, wird das Gespräch aus dem Mobilfunknetz angenommen.

Zur Übermittlung der Zielrufnummer des Nebenstellenanschlusses werden folgende Lösungsmöglichkeiten vorgeschlagen (prinzipiell können verschiedene geeignete Informationselemente der SETUP Nachricht die gewünschte Information zur Mobilfunknetz-Zugangseinrichtung transportieren):
- Der gewünschte Nebenstellenanschluß wird als Calling_Line_Identification (CLI) übermittelt. Dabei wird der gewünschte Nebenstellenanschluß als Calling_Party in der SETUP Nachricht zum GSM-Gateway übertragen.
- Der gewünschte Nebenstellenanschluß wird als Unstructered_SS_Data (USSD) übermittelt. Dabei wird der gewünschte Nebenstellenanschluß als User_User_Facility in der SETUP Nachricht zum GSM-Gateway übertragen.
- Der gewünschte Nebenstellenanschluß wird als Called_Party übermittelt. Dabei wird der gewünschte Nebenstellenanschluß als Called_Party_BCD_Number in der SETUP Nachricht zum GSM-Gateway übertragen.
- Der gewünschte Nebenstellenanschluß wird als Called_Party_Subaddress übermittelt. Dabei wird der gewünschte Nebenstellenanschluß als Called_Party_Subaddress in der SETUP Nachricht zum GSM-Gateway übertragen.

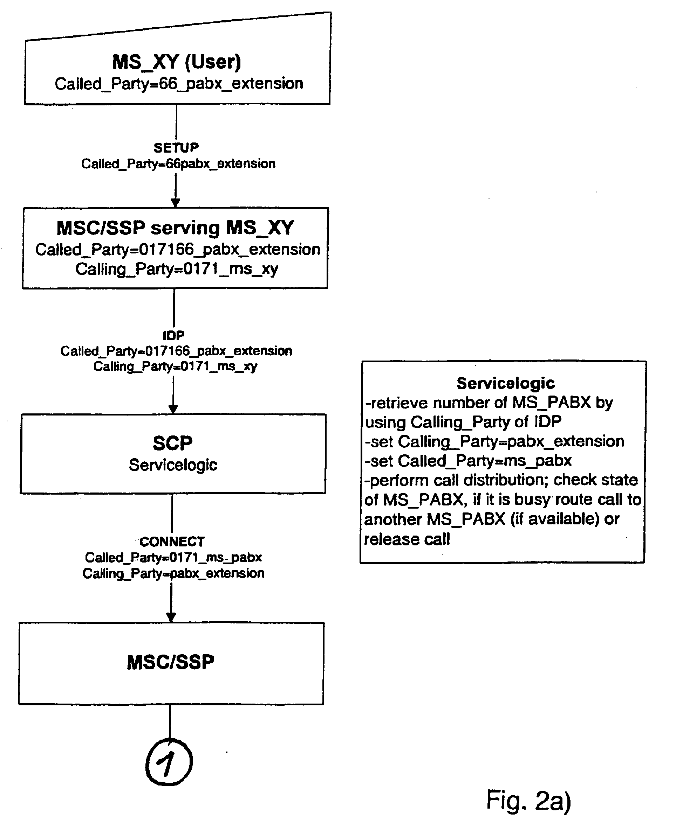

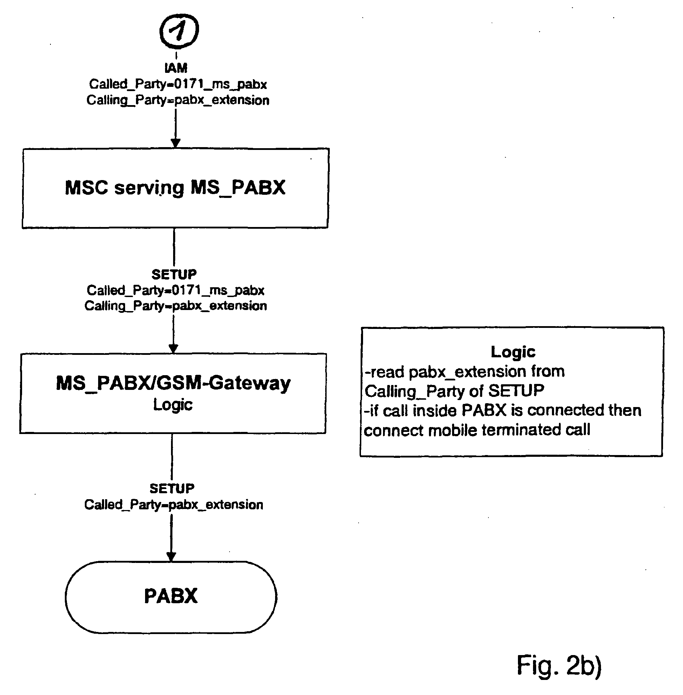

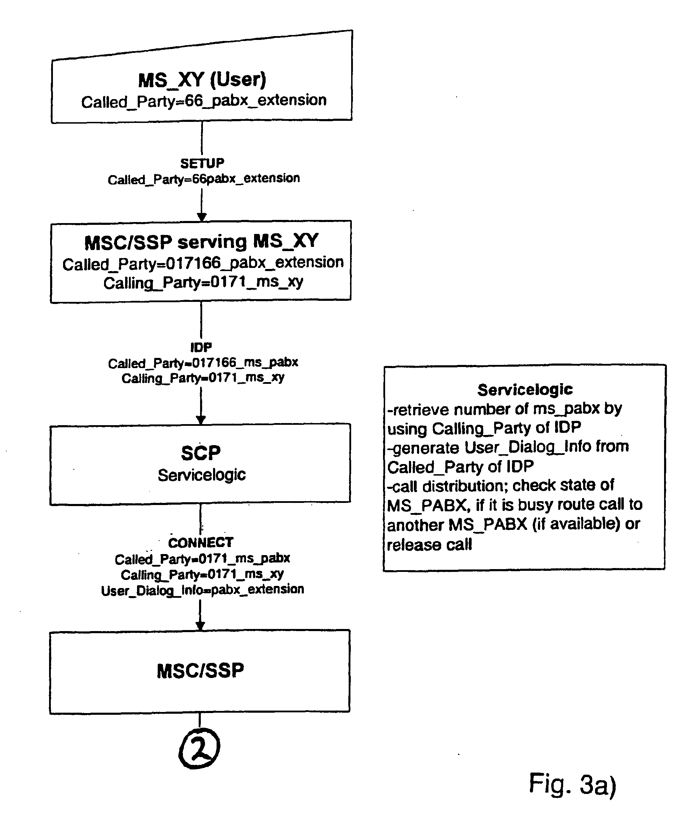

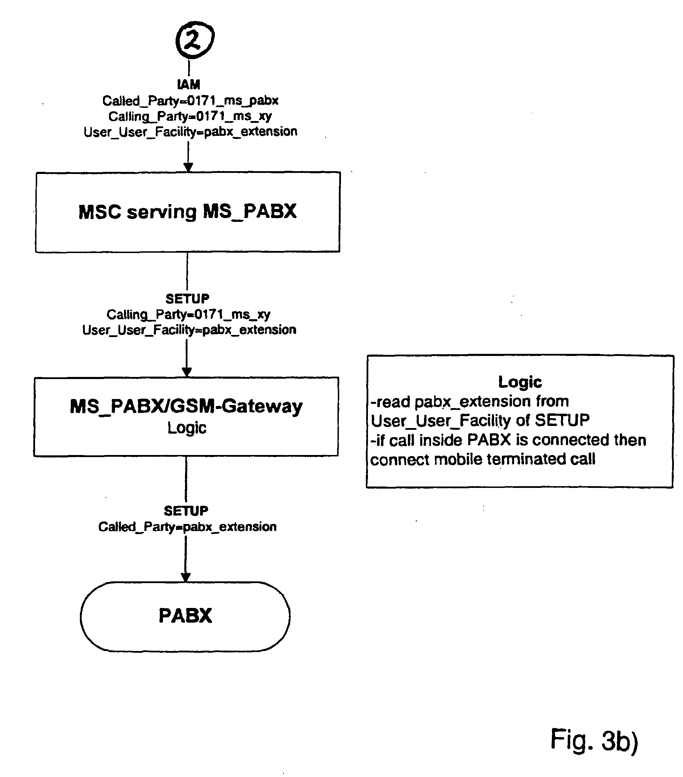

In Figur 2a) und b) ist das Ablaufdiagramm des Verbindungsaufbaus dargestellt, wobei die gewünschte Zielrufnummer (Nebenstellenanschluß) als Calling_Line_Identification (CLI) übermittelt wird. Figur 3 a) und b) zeigen als zweites Beispiel ein Ablaufdiagramm des Verbindungsaufbaus, wobei die gewünschte Zielrufnummer (Nebenstellenanschluß) als Unstructered_SS_Data übermittelt wird.

## Patentansprüche

1. Verfahren zum Verbindungsaufbau von einem Mobilfunknetz zu einer Zielrufnummer eines privaten Kommunikationsnetzes über eine Mobilfunknetz-Zugangseinrichtung, bei dem ein Verbindungswunsch von einem mobilen Endgerät zur Mobilfunknetz-Zugangseinrichtung übertragen wird,
**dadurch gekennzeichnet,**
**daß** die Mobilfunknetz-Zugangseinrichtung zuerst einen Verbindungsaufbau zu der gewünschten Zielrufnummer des privaten Kommunikationsnetzes einleitet und im Erfolgsfall anschließend eine Verbindung zu dem mobilen Endgerät aufbaut.

2. Verfahren nach Anspruch 1,
**dadurch gekennzeichnet,**
**daß** die Zielrufnummer des privaten Kommunikationsnetzes bei Übertragung des Verbindungswunsches durch das mobile Endgerät mit zu der Mobilfunknetz-Zugangseinrichtung übertragen wird.

3. Verfahren nach Anspruch 2,
**dadurch gekennzeichnet,**
**daß** eine Auswertung der Zielrufnummer durch eine mit der Mobilfunknetz-Zugangseinrichtung verbundenen Auswerteeinrichtung, vorzugsweise durch ein Intelligentes Netzwerk, erfolgt.

4. Verfahren nach einem der Ansprüche 2 oder 3,
**dadurch gekennzeichnet,**
**daß** auf Seiten der Mobilfunknetz-Zugangseinrichtung eine Rufnummernumsetzung erfolgt.

5. Verfahren nach einem der Ansprüche 2 bis 4,
**dadurch gekennzeichnet,**
**daß** neben der Zielrufnummer noch weitere Informationselemente zur Durchführung des Verbindungsaufbaus von der Mobilfunknetz-Zugangseinrichtung zum privaten Kommunikationsnetz modifiziert oder neu eingefügt werden, vorzugsweise durch ein Intelligentes Netzwerk.

## Claims

1. Method for call set-up by a mobile communications network to a destination call number in a private communications network via a mobile communications network access device in which a request for connection is transmitted from a mobile terminal device to the mobile communications network access device, **characterised in that** the mobile communications network access device first initiates a call set-up to the requested destination call number in the private communications network and if this is successful then sets up a connection to the mobile terminal device.

2. Method according to claim 1, **characterised in that** the destination call number in the private communications network is also transmitted on transmission of the request for connection by the mobile terminal device to the mobile communications network access device.

3. Method according to claim 2, **characterised in that** evaluation of the destination call number is carried out by an evaluation device connected to the mobile communications network access device, preferably by an intelligent network.

4. Method according to one of claims 2 or 3, **characterised in that** a call number conversion ensues on the part of the mobile communications network access device.

5. Method according to any of claims 2 to 4, **characterised in that** apart from the destination call number further information elements for carrying out the call set-up by the mobile communications network access device to the private communications network are modified or freshly added, preferably by an intelligent network.

## Revendications

1. Procédé pour établir une communication entre un réseau radiotéléphonique mobile et un numéro d'appel de destinataire d'un réseau de communication privé par l'intermédiaire d'un dispositif d'accès au réseau mobile, selon lequel un souhait de communication est transmis par un terminal mobile au dispositif d'accès au réseau mobile,
**caractérisé en ce que** le dispositif d'accès au réseau mobile déclenche tout d'abord l'établissement d'une communication avec le numéro d'appel de destinataire voulu du réseau de communication privé, et établit ensuite, en cas de succès, une communication avec le terminal mobile.

2. Procédé selon la revendication 1, **caractérisé en ce que** le numéro d'appel de destinataire du réseau de communication privé est transmis lui aussi au dispositif d'accès au réseau mobile lors de la transmission du souhait de communication par le terminal mobile.

3. Procédé selon la revendication 2, **caractérisé en ce qu'**une analyse du numéro d'appel de destinataire se fait grâce à un dispositif d'analyse qui est relié au dispositif d'accès au réseau mobile, de préférence grâce à un réseau intelligent.

4. Procédé selon la revendication 2 ou 3, **caractérisé en ce que** du côté du dispositif d'accès au réseau mobile a lieu une conversion du numéro d'appel.

5. Procédé selon l'une des revendications 2 à 4, **caractérisé en ce qu'**en plus du numéro d'appel de destinataire, d'autres éléments d'information sont modifiés ou introduits pour la réalisation de l'établissement de la communication entre le dispositif d'accès au réseau mobile et le réseau de communication privé, de préférence grâce à un réseau intelligent.
